# DEMANDE DE BREVET EUROPEEN

(11) **EP 1 722 564 A1**
(43) Date de publication de la demande: **15.11.2006**
(21) Numéro de dépôt: 05291046.0
(22) Date de dépôt: 13.05.2005
(51) Int. Cl.: H04N 7/167, H04H 1/00

(54) **Méthode d'accès conditionnel local pour équipements mobiles**

(71) Demandeur: Nagra France Sarl, 75015 Paris (FR)
(72) Inventeur: Wendling, Bertrand, 78220 Viroflay (FR); Landier, Olivier, 92370 Chavilles (FR)
(74) Mandataire: Wenger, Joel-Théophile

(57) **Abrégé**

La présente invention propose une méthode d'accès conditionnel à un flux de données numériques encryptées avec au moins un premier mot de contrôle CW et diffusé via un émetteur (E1, E2) d'un réseau de diffusion (NET1) à au moins un équipement mobile (EM1, EM2) connecté également via un réseau de communication mobile (NET2) à un centre de gestion (CG). Le flux diffusé contient des messages de contrôle ECM encryptés avec une clé de transmission TK et comprenant un second mot de contrôle CW' obtenu par l'encryption du premier mot de contrôle CW avec une clé locale KL. La méthode est caractérisée en ce qu'elle comprend les étapes suivantes:
- Réception par l'équipement mobile (EM1, EM2) d'au moins un cryptogramme via le réseau mobile (NET2),
- Détermination d'au moins une clé locale KL à partir du cryptogramme reçu,
- Réception d'un message de contrôle ECM via le réseau de diffusion (NET1), décryption dudit message ECM et obtention du second mot de contrôle CW',
- Décryption du second mot de contrôle CW' avec la clé locale (KL) et obtention du premier mot de contrôle CW,
- Décryption des données du flux avec le premier mot contrôle CW.

## Description

### Domaine technique

L'invention concerne le domaine de l'accès conditionnel à un flux de données numériques diffusé par voie hertzienne et reçu par une pluralité d'équipements mobiles, tels que, par exemple, un téléphone portable, un assistant personnel PDA (Personal Digital Assistant), un récepteur portable de télévision numérique, un ordinateur portable.

Les données diffusées sont cryptées et ne peuvent être reçues en clair que par des équipements autorisés dont l'utilisateur a acquis les droits nécessaires. Ces droits, stockés dans un module de sécurité associé à l'équipement mobile, consistent en un ensemble de clés permettant de décrypter des mots de contrôles contenus dans des messages de contrôle ECM (Entitlement Control Message) diffusés dans le flux des données audio / vidéo.

Un module de sécurité est un dispositif réputé inviolable contenant diverses clés d'encryption/décryption, des informations servant à identifier un utilisateur sur un réseau et des données qui définissent des droits acquis par l'utilisateur pour la réception d'un contenu diffusé. Le module de sécurité peut se trouver sous différentes formes telles qu'une carte à puce amovible insérée dans un lecteur, un circuit intégré soudé sur une carte mère, une carte du type SIM (Subscriber Identity Module) que l'on rencontre dans la plupart des équipements mobiles.

### Arrière plan technique

Actuellement les équipements mobiles configurés pour la réception de programmes de télévision numérique sont basés sur des technologies normalisées telles que OMA (Open Mobile Alliance), DVB-H (Digital Video Broadcast, Handheld), ou DMB (Digital Multimedia Broadcasting) qui est en quelque sorte une extension à large bande de DAB (Digital Audio Broadcasting).

La technologie OMA met en oeuvre une solution complète unique pour un marché donné comme celui des téléphones portables où chaque équipement et les fournisseurs de contenu supportent la technologie OMA.

La technologie DVB a été conçue pour normaliser les décodeurs de télévision numériques (set top boxes) dans le but de réduire leurs coûts à grande échelle. Elle normalise les éléments intervenant au niveau de l'accès conditionnel au contenu diffusé dans le format MPEG-2 ou MPEG-4 pour la télévision mobile sur Internet. Ces éléments consistent en l'algorithme d'encryption du contenu diffusé, les messages de contrôle ECM contenant les clés de décryption ou mots de contrôle, les messages d'administration EMM contenant les droits des utilisateurs et l'interface entre le décodeur et le module de sécurité gérant l'accès conditionnel.

Dans le cas particulier de la télévision mobile DVB-H, la protection du contenu est développée par le groupe DVB-CBMS (Digital Video Broadcasting - Convergence of Broadcast and Mobile Services).

La normalisation ne s'étend ni au contenu à valeur ajoutée des messages ECM et EMM, ni à la méthode de protection de ceux-ci. Chaque fournisseur d'accès conditionnel utilise sa propre structure de données et ses propres moyens de protection pour un même contenu diffusé. La technologie DVB offre donc de nombreuses possibilités de développement de la sécurité du contenu.

L'inconvénient d'une normalisation trop poussée comme celle de la technologie OMA réside en ce que des mesures de protection additionnelles sont restreintes surtout lorsque le système à accès conditionnel a été piraté par des tiers.

Dans la technologie DVB, la découverte d'un ou de plusieurs mots de contrôle contenu dans les messages de contrôle ECM permettent une décryption du flux sans devoir acquérir un abonnement ou payer les programmes à péage diffusés. Ce piratage cause un préjudice touchant aussi bien le fournisseur de contenu que celui de l'accès conditionnel.

Le document W02004084555 décrit une méthode d'accès utilisant un téléphone mobile à des services d'information diffusés via un premier canal de communication à un dispositif de réception. Cette méthode comprend les étapes suivantes:
- stockage dans le téléphone mobile de données de contrôle d'accès permettant l'accès aux informations reçues par le dispositif de réception via le premier canal,
- établissement d'une communication entre le dispositif de réception et le téléphone mobile via un second canal local sans fil à faible portée du type Bluetooth ou WiFi (Wireless Fidelity) selon la norme IEEE 802.11,
- transmission des données de contrôle d'accès stockées dans le téléphone mobile au dispositif de réception via le second canal afin d'autoriser l'accès aux services d'information diffusé via le premier canal.

La réception de données de contrôle d'accès via un second canal indépendant de celui de diffusion des services à accès contrôlé permet certes d'améliorer leur protection contre le piratage, mais pas de limiter l'étendue des effets d'une éventuelle découverte de clés de décryption ou de moyens pour les produire.

### Description de l'invention

Le but de la présente invention est de pouvoir disposer de moyens de contre-mesures en cas de piratage indépendamment du type d'équipement mobile et à un coût relativement faible. Ces moyens agissent sur des éléments de protection qui ne sont pas concernés pas la normalisation et de préférence modulables par le fournisseur d'accès conditionnel.

Un autre but est de limiter les effets néfastes d'un éventuel piratage à un nombre aussi réduit que possible d'équipements mobiles.

Ces buts sont atteints par une méthode d'accès conditionnel à un flux de données numériques encryptées avec au moins un premier mot de contrôle et diffusé via un émetteur d'un réseau de diffusion à au moins un équipement mobile, ce dernier étant également connecté via un réseau de communication mobile à un centre de gestion, ledit flux contenant des messages de contrôle encryptés avec une clé de transmission et comprenant un second mot de contrôle obtenu par l'encryption du premier mot de contrôle avec une clé locale, ladite méthode est caractérisée en ce qu'elle comprend les étapes suivantes:
- Réception par l'équipement mobile d'au moins un cryptogramme via le réseau mobile,
- Détermination d'au moins une clé locale à partir du cryptogramme reçu,
- Réception d'un message de contrôle via le réseau de diffusion, décryption dudit message et obtention du second mot de contrôle,
- Décryption du second mot de contrôle avec la clé locale et obtention du premier mot de contrôle,
- Décryption des données du flux avec le premier mot contrôle.

La méthode se distingue par l'utilisation d'un cryptogramme contenant par exemple des informations de localisation de l'équipement mobile. L'accès aux données du flux est ainsi autorisé seulement aux équipements mobiles se trouvant en un lieu géographique donné.

La découverte d'un mot de contrôle encryptant les données du flux aura ainsi des conséquences limitées aux équipements mobiles fonctionnant dans un quartier ou dans une ville sans s'étendre à tous les équipements du pays par exemple.

Selon un premier mode de réalisation, le flux diffusé se compose du contenu encrypté par des mots de contrôle et de messages de contrôles. Ces derniers contiennent chacun des mots de contrôle résultant de l'encryption des mots de contrôle originaux avec une clé locale. Chaque équipement mobile se connecte d'abord à un réseau mobile de type GSM (Global System for Mobile Communications), UMTS (Universal Mobile Telecommunications System) ou autre par lequel, il est localisé par le centre de gestion. L'équipement mobile reçoit de ce centre un cryptogramme contenant un identifiant local correspondant à celui de la cellule du réseau la plus proche de sa position géographique. Ce cryptogramme transmis au module de sécurité de l'équipement permet de déterminer une ou plusieurs clés locales qui sont définies comme des fonctions de l'identifiant local.

Plusieurs clés peuvent être générées à partir d'un cryptogramme permettant ainsi la décryption de mots de contrôle diffusés par des émetteurs voisins lorsque l'équipement se déplace d'un quartier à un autre par exemple.

L'équipement mobile dispose de cette fonction et/ou de ses paramètres via des messages d'administration EMM qu'il peut recevoir par exemple du centre de gestion lors sa connexion au réseau mobile GSM, UMTS. Une requête particulière par message court SMS, courriel ou appel téléphonique par exemple serait une alternative pour obtenir cette fonction.

Le cryptogramme peut être formé, par exemple, en effectuant une fonction XOR (OU exclusif) sur l'identifiant de la cellule, selon une réalisation simple. Selon une variante avec un degré de sécurité plus élevé, une fonction cryptographique utilisant un nombre aléatoire combiné avec l'identifiant de la cellule transmis par le réseau mobile peut être utilisée.

Selon une forme de réalisation permettant à l'équipement mobile de se déplacer d'une cellule à une autre, deux solutions sont possibles:
a) plusieurs cryptogrammes correspondant à des cellules environnantes peuvent être transmis à l'équipement mobile lors de sa connexion à la première cellule. Le module de sécurité peut ainsi déterminer les clés locales nécessaires pour décrypter des mots de contrôles à partir des cellules suivantes.
b) un ensemble de clés locales peuvent être déterminées à partir d'un seul cryptogramme reçu permettant la décryption de mots de contrôles à partir de cellules différentes. Ce cryptogramme contient par exemple une chaîne de clés locales correspondant à des cellules consécutives

Les messages de contrôle ECM diffusés dans le flux sont propres à une région donnée car ils contiennent des mots de contrôle qui ne peuvent être décryptés que par une clé locale qui est déterminée à partir de paramètres spécifiques à un réseau mobile d'un lieu donné.

Après décryption des messages ECM avec la clé de transmission, les mots de contrôle sont extraits. La clé locale, déterminée grâce au cryptogramme reçu, permet de retrouver les mots de contrôle originaux permettant de décrypter le contenu diffusé à condition de disposer des droits nécessaires dans le module de sécurité.

Ces droits sont obtenus à partir de messages d'administration EMM diffusés par l'intermédiaire d'un système à accès conditionnel CAS dont le serveur est connecté à celui de l'opérateur du réseau mobile GSM ou UMTS ou centre de gestion.

### Brève description des figures

L'invention sera mieux comprise grâce à la description détaillée qui va suivre et qui se réfère aux figures annexées données à titre d'exemples nullement limitatifs.
- La figure 1 illustre un schéma bloc d'un exemple de configuration avec deux émetteurs placés en des lieux distincts et pouvant être captés par un équipement mobile local.
- La figure 2 montre un schéma bloc de l'encryption du mot de contrôle d'un message de contrôle avec une clé locale et l'encryption d'un message de contrôle avec une clé de transmission.
- La figure 3 illustre un exemple schématisé de zones de diffusion des émetteurs du réseau diffusion et des cellules du réseau mobile à l'intérieur de ces zones de diffusion.

### Description détaillée de l'invention

Un flux de données numériques formant un contenu (C) encrypté avec des mots de contrôle (CW) sont diffusées avec des messages de contrôle ECM. Ces données numériques peuvent aussi bien comprendre des données audio/vidéo de programmes de télévision que des données correspondant à des applications pouvant être exploitées par un équipement mobile.

Un serveur d'un fournisseur d'accès conditionnel (CA) est connecté à un serveur d'un opérateur (OP) gérant un réseau de diffusion (NET1) et un réseau mobile (NET2). L'opérateur (OP) diffuse sur le réseau de diffusion (NET1) le contenu (C) encrypté avec des mots de contrôle CW ainsi que les messages ECM contenant un mot de contrôle CW' encrypté avec une clé locale (KL1, KL2). Cette clé locale est spécifique à l'emplacement géographique de l'émetteur (E1, E2) du réseau de diffusion tel qu'un quartier, une ville ou une région. De plus le fournisseur d'accès (CA) diffuse des messages d'administration EMM qui définissent les droits d'accès au contenu selon les acquisitions de l'utilisateur comme un abonnement ou un prépaiement de programmes sélectionnés.

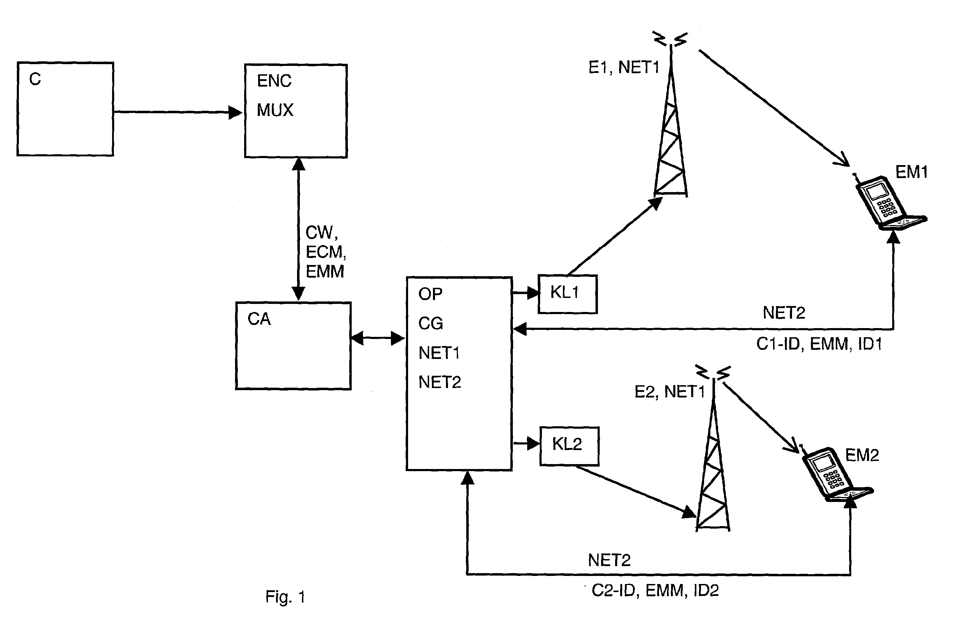

Les équipements mobiles EM1, EM2 se connectent respectivement au réseau de diffusion (NET1) et au réseau mobile (NET2). Le réseau de diffusion (NET1) fournit le contenu C encrypté tandis que le réseau mobile (NET2) fournit les paramètres nécessaires à la réception du contenu (C). Le réseau de diffusion (NET1) peut être par exemple du type DVB-H où le contenu est diffusé par voie hertzienne par un émetteur (E1, E2) local, le réseau mobile (NET2) sera du type GSM ou UMTS par exemple, permettant aussi les communications avec le centre de gestion (CG) de l'opérateur (OP), (voir figure 1).

Les émetteurs (E1, E2) du réseau de diffusion (NET1) diffusent les données numériques de façon unidirectionnelle vers les équipements mobiles (EM1, EM2) tandis que les données du réseau mobile (NET2) transitent de façon bidirectionnelle entre les équipements mobiles (EM1, EM2) et le centre de gestion (CG).

Les équipements mobiles (EM1, EM2) sont susceptibles de se déplacer d'une cellule du réseau mobile (NET2) vers une autre tout en conservant la possibilité de recevoir les données diffusées par l'un ou l'autre des émetteurs du réseau de diffusion (NET1).

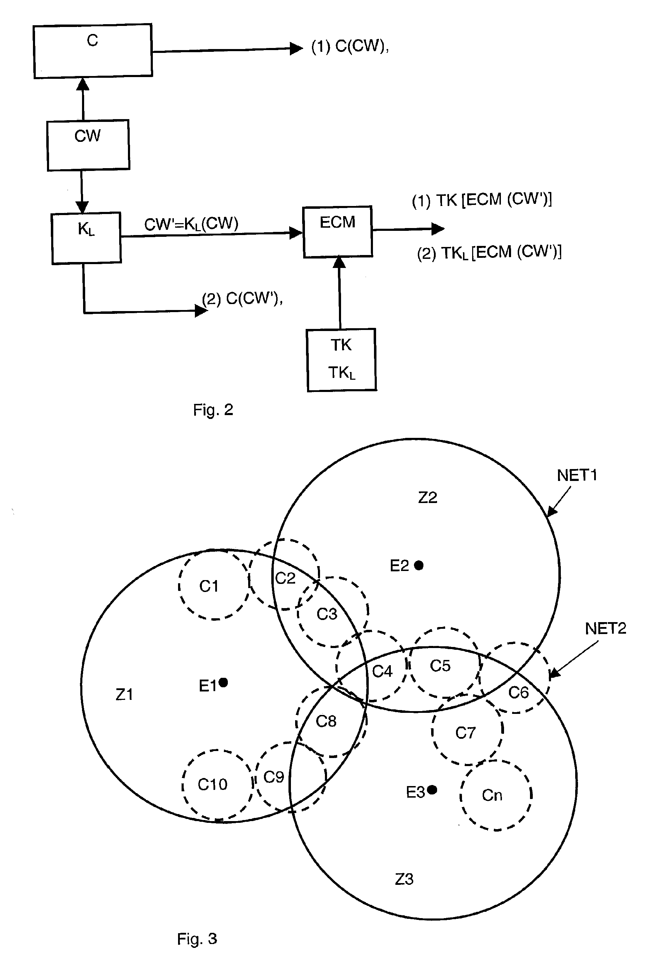

La figure 3 illustre une telle situation où des cellules (C1 - C10 - Cn) du réseau mobile (NET2) forment des mailles s'étendant sur une ou plusieurs zones de diffusion (Z1, Z2, Z3) des émetteurs (E1, E2, E3) du réseau (NET1). Lorsqu'un équipement mobile se déplace par exemple de la première zone (Z1) de diffusion vers la troisième zone (Z3) de diffusion, il peut recevoir un ensemble de clés correspondant aux cellules qu'il est susceptible de traverser, soit par exemple les clés des cellules C1 à C7 de l'exemple illustré. Ces clés locales permettent à l'équipement mobile de décrypter les mots de contrôle des messages ECM dans les zones (Z1) et (Z3) couvertes par les émetteurs (E1) et (E3). Selon, une variante, l'équipement mobile reçoit une clé locale chaque fois qu'il pénètre dans une cellule lors de son déplacement. Lorsque la cellule se trouve à cheval sur deux ou plusieurs zones de diffusion comme par exemple les cellules C2 à C6, l'équipement mobile peut recevoir autant de clés que la cellule recouvre de zones de diffusion.

Dans l'exemple de la figure 3, la cellule (C4) s'étend dans les trois zones (Z1, Z2, Z3) de diffusion. Dans ce cas, l'équipement mobile peut recevoir les trois clés locales lui permettant d'exploiter les données transmises par chacun des émetteurs (E1, E2, E3).

Les deux réseaux de diffusion et mobile (NET1, NET2) peuvent être du même type pour autant que la largeur de bande soit suffisante pour la transmission à la fois d'un contenu numérique et des échanges bidirectionnels de données. Par exemple, un réseau du type UMTS, EDGE (Enhanced Data Rates for Global Evolution) ou autre peut être envisagé.

Les ECM locaux ou plus précisément les mots de contrôle locaux CW' sont créés par le centre de gestion (CG) de l'opérateur (OP) mobile à partir des mots de contrôle originaux CW par encryption de ce mot avec une clé locale (KL1, KL2). Le nouveau mot de contrôle CW' = KL1(CW) ou KL2(CW) ainsi obtenu est inséré dans les messages ECM diffusés par l'émetteur (E1, E2) du réseau de diffusion (NET1) à destination d'équipements mobiles (EM1, EM2) connectés au réseau mobile (NET2). Ces équipements sont situés dans une cellule du réseau mobile (NET2) où ils peuvent recevoir le cryptogramme nécessaire à l'obtention de la clé locale (KL1, KL2). (voir figure 2, variante (1))

Il est à noter que les messages de contrôle ECM diffusés sont encryptés avec une clé de transmission (TK) mise à disposition des équipements mobiles (EM1, EM2) au moyen de messages d'administration EMM délivrés par le fournisseur d'accès (CA) via le centre de gestion (CG).

Selon un premier mode de réalisation, la clé locale (KL1, KL2) est déterminée par l'équipement mobile lors de sa connexion au réseau mobile (NET2) au moyen de données de localisation ou plus précisément d'un identifiant d'une cellule (C1-ID, C2-ID) de ce réseau transmis par le centre de gestion (CG). La clé locale peut être déterminée de plusieurs manières:
- calcul effectué au moyen d'une opération ou une fonction mathématique relativement simple comme par exemple XOR (OU exclusif) ou à partir d'un nombre aléatoire transmis par le centre de gestion.
- combinaison avec une clé propre au réseau mobile ou à un noeud de celui-ci fournie soit lors de la connexion de l'équipement mobile avec le centre de gestion, soit en réponse à une requête particulière par message court SMS par exemple.
- le cryptogramme transmis peut constituer la clé locale pouvant être exploitée telle quelle sans calcul intermédiaire par l'équipement mobile pour décrypter les mots de contrôle locaux.

En résumé, cette clé locale est nécessaire pour décrypter les mots de contrôle CW' contenu dans les ECM locaux diffusés dans le flux de données numériques afin d'obtenir les mots de contrôle CW originaux encryptant effectivement le contenu diffusé.

Au-delà de la distribution de cryptogrammes aux équipements mobiles reconnus localement, le centre de gestion (CG) vérifie les requêtes sur l'ensemble du réseau mobile (NET2) afin de détecter si un même module de sécurité sollicite un cryptogramme depuis plusieurs cellules du réseau. Cette situation se présente lorsqu'un module de sécurité a été cloné, distribué et utilisé en des lieux différents. Dans un tel cas, le cryptogramme ou la clé demandée sera refusé et le module de sécurité considéré comme invalide lors de futures tentatives de connexion. La vérification est effectuée sur la base de l'identificateur du module de sécurité (ID1, ID2) transmis par l'équipement mobile (EM1, EM2) au centre de gestion (CG) lors de la requête du cryptogramme. L'exclusion d'un module de sécurité cloné peut aussi être effectuée par l'intermédiaire des messages d'administration (EMM) que seul un équipement mobile à un endroit donné et reconnu par le centre de gestion peut recevoir. Un autre équipement mobile dans une autre cellule avec un même module de sécurité ne recevra donc pas ce message porteur des droits d'accès aux données du réseau de diffusion.

Selon une variante l'équipement mobile est muni d'un système global de positionnement du type GPS (Global Positioning System) qui détermine les coordonnées correspondant à sa position géographique. Ces données servent ensuite à la détermination de la clé locale à partir du cryptogramme reçu.

Selon un second mode de réalisation, la clé de transmission (TK) encryptant les messages de contrôle ECM peut aussi dépendre de l'émetteur de diffusion. Cette configuration procure ainsi deux niveaux de sécurité à franchir pour accéder au contenu diffusé dans le flux. Lorsque l'équipement mobile se connecte au réseau mobile, il reçoit un message d'administration EMM contenant la clé de transmission locale (TK_{L}) ou des éléments aptes à la déterminer (paramètres, fonctions de calcul). Le message EMM n'est en général transmis que si la clé de transmission locale (TK_{L}) n'est pas disponible dans le module de sécurité de l'équipement mobile ou après un changement de clé. En effet, la validité de cette dernière peut par exemple être limitée à une certaine période pour un émetteur donné.

Après avoir obtenu cette clé (TK_{L}) permettant de décrypter les messages de contrôle ECM, l'équipement mobile détermine la ou les clés locales (KL1, KL2) nécessaires à la décryption des mots de contrôle CW' contenu dans les messages ECM. Ces clés locales (KL1, KL2) sont déterminées selon les procédés décrits plus haut.

Les informations de localisation comme les identifiants de cellule de réseau ou les coordonnées de position des équipements mobiles peuvent être exploitées de manière à empêcher l'accès à certains contenus diffusés à des équipements mobiles se trouvant dans une région donnée. En effet les ECM diffusés et associés à un contenu prédéterminé contiennent un mot de contrôle encrypté avec une clé qui ne peut pas être obtenue à partir de certains identifiants de cellule car, par exemple, la fonction de calcul de la clé ne possède pas les paramètres adéquats. Autrement dit, cette restriction permet d'occulter certains lieux à la réception du contenu diffusé.

Selon une configuration, une clé de réseau ou de noeud peut être spécifique à un canal diffusé. Lorsqu'un équipement mobile se trouve à un lieu donné, l'identifiant local issu de la clé de noeud ou la clé de noeud elle-même peut ne pas être transmis par le centre de gestion, ce qui interdit la réception de ce canal à l'endroit du noeud en question.

Selon une autre configuration, (voir figure 2, variante (2)) le ou les opérateurs de diffusion locale décryptent le flux à l'aide du mot de contrôle original CW puis le réencryptent avec des mots de contrôle locaux (CW'1, CW'2). Les émetteurs locaux (E1, E2) diffusent donc chacun un flux encrypté avec des mots de contrôle (CW'1, CW'2) et des messages ECM locaux contenant ces mots de contrôle (CW'1, CW'2) caractéristiques à chaque émetteur (E1, E2). L'équipement mobile d'un utilisateur se connecte au réseau mobile pour recevoir un message d'administration EMM contenant au moins une clé de transmission (TK_{L}) locale permettant de décrypter les messages ECM locaux afin d'en extraire les mots de contrôle (CW'1, CW'2).

Le message d'administration EMM peut être reçu soit automatiquement après l'établissement d'une connexion reconnue par le réseau mobile (NET2), soit à la demande au moyen d'un message court SMS par exemple.

Bien entendu, il est aussi envisageable que l'équipement mobile reçoit un ensemble de clés de transmission locales (TK_{L}) dans le message EMM lors de sa connexion à une cellule du réseau mobile (NET2). Cet ensemble permettrait de décrypter les messages ECM provenant d'émetteurs voisins lorsque l'équipement mobile se déplace d'une zone de diffusion à une autre sans solliciter un message EMM à chaque cellule.

## Revendications

1. Méthode d'accès conditionnel à un flux de données numériques encryptées avec au moins un premier mot de contrôle CW et diffusé via un émetteur (E1, E2) d'un réseau de diffusion (NET1) à au moins un équipement mobile (EM1, EM2), ce dernier étant également connecté via un réseau de communication mobile (NET2) à un centre de gestion (CG), ledit flux contenant des messages de contrôle ECM encryptés avec une clé de transmission TK et comprenant un second mot de contrôle CW' obtenu par l'encryption du premier mot de contrôle CW avec une clé locale KL, ladite méthode est **caractérisée en ce qu'**elle comprend les étapes suivantes:
- Réception par l'équipement mobile (EM 1, EM2) d'au moins un cryptogramme via le réseau mobile (NET2),
- Détermination d'au moins une clé locale KL à partir du cryptogramme reçu,
- Réception d'un message de contrôle ECM via le réseau de diffusion (NET1), décryption dudit message ECM et obtention du second mot de contrôle CW',
- Décryption du second mot de contrôle CW' avec la clé locale (KL) et obtention du premier mot de contrôle CW,
- Décryption des données du flux avec le premier mot contrôle CW.

2. Méthode selon la revendication 1, **caractérisée en ce que** la clé locale (KL) est spécifique au lieu géographique où se situe l'émetteur (E1, E2) du réseau de diffusion (NET1) capté par l'équipement mobile (EM1, EM2) et que le cryptogramme comprend un identifiant (C1-ID, C2-ID) d'une cellule du réseau mobile (NET2) auquel ledit équipement est connecté.

3. Méthode selon les revendications 1 et 2, **caractérisée en ce que** le cryptogramme est transmis par le centre de gestion (CG) via le réseau mobile (NET2) lors de la connexion de l'équipement mobile (EM1, EM2) audit réseau.

4. Méthode selon la revendication 1, **caractérisée en ce que** la clé locale (KL) est obtenue à partir du cryptogramme et des coordonnées géographiques correspondant à la position de l'équipement mobile (EM1, EM2).

5. Méthode selon la revendication 4, **caractérisée en ce que** la position de l'équipement mobile (EM1, EM2) est déterminée par un dispositif de positionnement global associé audit équipement.

6. Méthode selon la revendication 1, **caractérisée en ce que** la clé locale (KL) est déterminée au moyen d'une fonction mathématique effectuée sur le cryptogramme reçu du centre de gestion (CG), ladite fonction étant obtenue au moyen de messages d'administration EMM délivrés par un fournisseur d'accès conditionnel via ledit centre de gestion (CG).

7. Méthode selon les revendications 1 et 2, **caractérisée en ce que** la clé locale (KL) est déterminée au moyen d'une combinaison de l'identifiant (C1-ID, C2-ID) d'une cellule du réseau mobile (NET2) avec une clé de noeud dudit réseau auquel l'équipement mobile (EM1, EM2) est connecté.

8. Méthode selon la revendication 1, **caractérisée en ce que** la clé locale (KL) est constituée par le cryptogramme reçu par l'équipement mobile (EM1, EM2).

9. Méthode selon la revendication 1, **caractérisée en ce que** la clé de transmission (TK) encryptant les messages de contrôle ECM est propre à l'émetteur (E1, E2) du réseau de diffusion (NET1).

10. Méthode selon les revendications 1 et 9, **caractérisée en ce qu'**elle comporte une étape supplémentaire de réception d'un message d'administration EMM suivie d'une étape d'extraction de la clé de transmission (TK) ou d'éléments aptes à déterminer ladite clé.

11. Méthode selon la revendication 1, où chaque émetteur (E1, E2) du réseau de diffusion (NET1) diffuse un flux de données numériques encryptées avec des mots de contrôle (CW'1, CW'2) propres audit émetteur (E1, E2) et des messages de contrôle ECM encryptés avec une clé de transmission locale (TK_{L}) contenant lesdits mots de contrôle (CW'1, CW'2) **caractérisée en ce que** l'équipement mobile (EM1, EM2) reçoit un message d'administration EMM, via le réseau mobile (NET2), contenant au moins une clé de transmission locale TK_{L}, décrypte les messages de contrôle ECM avec la clé de transmission locale TK_{L} locale reçue, extrait les mots de contrôle (CW'1, CW'2) et décrypte les données numériques du flux.

12. Méthode selon les revendication 1 à 11, **caractérisée en ce que** les émetteurs (E1, E2) du réseau de diffusion (NET1) diffusent les données numériques de façon unidirectionnelle vers les équipements mobiles (EM1, EM2) tandis que les données du réseau mobile (NET2) transitent de façon bidirectionnelle entre les équipements mobiles (EM1, EM2) et le centre de gestion (CG).
